# EUROPEAN PATENT APPLICATION

(11) **EP 4 843 456 A1**
(43) Date of publication of application: **25.11.2026**
(21) Application number: 25744522.1
(22) Date of filing: 17.01.2025
(51) Int. Cl.: A47J 31/40

(54) **MIXING MECHANISM, BEVERAGE BREWING DEVICE, AND BEVERAGE PREPARATION METHOD**

(30) Priority: 24.01.2024 CN 202410098651
(71) Applicant: CAYE TECHNOLOGY (SUZHOU) CO., LTD., Suzhou, Jiangsu 215000 (CN)
(72) Inventor: WU, Peng, Suzhou, Jiangsu 215000 (CN)
(74) Representative: Michalski Hüttermann & Partner mbB
(86) International application number: PCT/CN2025/073000
(87) International publication number: WO 2025/157081

(57) **Abstract**

A mixing device includes a pipeline extending from an inlet end to an outlet end. A flow channel is formed in the pipeline to guide a gas-liquid mixed fluid from the inlet end to the outlet end, thereby forming a beverage with foam. A cross-sectional dimension of the flow channel in a direction of fluid flow exhibits a decreasing trend at least partially along a flow direction. As the fluid passes through a section of the flow channel with the decreasing trend, its flow velocity slows down, allowing the gas and liquid in the fluid to gradually mix and form a stable foam beverage. The mixing device not only achieves excellent foaming effects but also features the pipeline with a larger inner diameter, making it less prone to clogging and easier to clean. A beverage preparation device and a method for preparing a beverage are also disclosed.

## Description

### TECHNICAL FIELD

The present invention relates to the technical field of beverage preparation, specifically to a mixing device, a beverage preparation device, and a method for preparing a beverage.

### BACKGROUND

Beverage preparation device, such as a coffee machine or a fully automatic milk frother, requires frothing during a beverage-making process. Specifically, air can be introduced into milk to transform the milk into a dense milk froth, enhancing the beverage's taste. In existing technical solutions, flow restrictors, labyrinth devices, or pressurization devices are typically used to extend the mixing time of milk and air to achieve frothing.

The flow restrictors primarily slow down a flow rate of a liquid at a discharge outlet of a gear pump, allowing the milk and the air to mix thoroughly (the flow rate is usually controlled between 2-10 g/s). However, the flow restrictors require timely cleaning; if not cleaned promptly, restrictor holes can become clogged with milk residue, leading to the inability of the pipeline to transport beverages or causing beverage contamination. The labyrinth devices mainly increase the length of a shared flow path for the gas-liquid mixture to ensure thorough mixing of the milk and the air. However, the labyrinth devices have complex structures, high manufacturing difficulty, and many hard-to-reach hygiene spots that are not easily cleaned by cleaning solutions. Over time, this can contaminate the entire milk system. Additionally, during the mixing process, the fluid undergoes multiple accelerations and decelerations, leading to repeated pressure changes and turbulence, which results in unstable milk froth quality. In pressurization devices, the pressure of the gas-liquid mixture increases directly during the frothing process, preventing the milk and the air from fully integrating and making beverage quality difficult to control.

### SUMMARY

To address the aforementioned technical issues, the present invention provides a mixing device that is not prone to clogging, easy to clean, and capable of producing stable and easily controllable foam, along with a beverage preparation device and a method for preparing a beverage.

To address the aforementioned technical issues, the present invention provides a mixing device including:
a pipeline having an inlet end and an outlet end, the pipeline extending from the inlet end to the outlet end, a flow channel communicating the inlet end with the outlet end being formed within the pipeline, a cross-sectional dimension of the flow channel in a flow direction of a fluid being at least partially in a reducing trend along the flow direction, and a flow velocity of the fluid decreasing when flowing through a section of the flow channel having the reducing trend.

In one embodiment, the flow channel includes a plurality of flow channel segments communicating with one another in an extending direction of the pipeline, and flow directions of every two adjacent flow channel segments are different.

In one embodiment, in the extending direction of the pipeline, maximum cross-sectional dimensions of the plurality of flow channel segments decrease sequentially.

In one embodiment, in each of the flow channel segments, a cross-sectional dimension of the flow channel segment gradually decreases along the flow direction; or
in each of the flow channel segments, a cross-sectional dimension of the flow channel segment changes in stages along the flow direction, and an upstream cross-sectional dimension of the flow channel segment in the flow direction is larger than a downstream cross-sectional dimension thereof; or
cross-sectional dimensions of the plurality of flow channel segments decrease gradually in a step-like trend.

In one embodiment, an inner diameter at the inlet end is r1, an inner diameter at the outlet end is r2, and a ratio of r1 to 2×r2 is greater than 1 and less than or equal to 3; and/or
a fluid pressure at the inlet end is P1, a fluid pressure at the outlet end is P2, and a ratio of P2 to P1 is greater than or equal to 1.5 and less than or equal to 4; and/or
a fluid flow velocity at the inlet end is V1, a fluid flow velocity at the outlet end is V2, and a ratio of V1 to V2 is greater than or equal to 2.

In one embodiment, each of the flow channel segments is arranged in a spiral shape rotating around a rotation axis, an extension direction of the rotation axis is the same as the extending direction of the pipeline; and/or
among the plurality of flow channel segments, rotation directions of every two adjacent flow channel segments in the extending direction of the pipeline are opposite.

In one embodiment, the mixing device further includes a core body inserted into the pipeline, the flow channel is defined and formed between the core body and an inner wall of the pipeline; wherein the core body is integrally formed or detachably inserted into the pipeline.

In one embodiment, the core body includes a plurality of segments of flow guide plates arranged sequentially along the extending direction of the pipeline, each segment of the flow guide plate is arranged in a rotating spiral shape, and rotation directions of every two adjacent flow guide plates in the extending direction of the pipeline are opposite.

In one embodiment, each of the flow guide plates extends radially toward a wall of the pipeline, such that two flow channel spaces separated from each other are respectively formed between two sides of each segment of the flow guide plate and the wall of the pipeline.

In one embodiment, the flow channel is provided with a rotation axis, and a rear end edge of each segment of the flow guide plate in the flow direction is rotated by a specific rotation angle around the rotation axis compared to a front end edge thereof.

In one embodiment, the specific rotation angle is greater than 350 degrees and less than 370 degrees.

In one embodiment, in a plane normal to the rotation axis, a front end edge of a subsequent segment of flow guide plate intersects a rear end edge of a preceding segment of flow guide plate at a specific included angle.

In one embodiment, the specific included angle is greater than 80 degrees and less than 100 degrees.

In one embodiment, an inner diameter of the pipeline gradually decreases along the extending direction of the pipeline, and an outer diameter of the core body gradually decreases along the extending direction of the pipeline.

In one embodiment, an included angle b between an outer contour connecting line of the core body along an axial direction and the rotation axis is greater than 0 degrees and less than or equal to 10 degrees.

In one embodiment, an opening is provided at the inlet end of the pipeline, the core body is detachably inserted into the pipeline through the opening, the opening is located on a path in the extending direction of the flow channel, and the mixing device further includes a sealing component to seal the opening.

In one embodiment, the pipeline extends along a vertical direction of gravity, the inlet end is located at a lower end of the pipeline, and the core body is inserted upwardly into the pipeline through the opening.

In one embodiment, a protruding post extending toward the sealing component is provided on the core body, and the protruding post is disposed on a flow path of the fluid introduced into the flow channel.

In one embodiment, a through hole is provided on a peripheral side of the pipeline, and the through hole is relatively adjacent to the inlet end and configured for introducing the fluid into the flow channel.

In one embodiment, a protruding structure is protrudingly provided on an inner circumference of the pipeline, and the protruding structure defines and forms the flow channel.

To address the aforementioned technical issues, the present invention provides a beverage preparation device, including:
a main body having a beverage outlet;
a mixing device provided on the main body, the mixing device including a pipeline having an inlet end and an outlet end, the pipeline extending from the inlet end to the outlet end, a flow channel communicating the inlet end with the outlet end being formed within the pipeline, a cross-sectional dimension of the flow channel in a flow direction of a fluid being in a reducing trend, wherein the flow channel includes a plurality of flow channel segments adjacently connected and communicating with each other in an extending direction of the pipeline, and flow directions of every two adjacent flow channel segments are different; the pipeline is provided with a through hole relatively adjacent to the inlet end; the outlet end communicates with the beverage outlet; and
a delivery conduit, an output end of the delivery conduit communicating with the flow channel via the through hole.

A fluid flow velocity at the output end is V, a fluid flow velocity at the outlet end is V2, and V2 is less than or equal to 0.5×V; and/or
an inner diameter of the delivery conduit at the output end is less than or equal to a minimum inner diameter of the pipeline; and/or
an inner diameter of the delivery conduit at the output end is r, an inner diameter at the inlet end is r1, and r1 is greater than 2×r.

In one embodiment, the beverage preparation device further includes a fluid pump, a pulse air valve and a heating device; the fluid pump is configured for pumping the fluid to the delivery conduit; the pulse air valve is configured for intermittent opening and closing; and the heating device is disposed downstream of the outlet end.

In one embodiment, temperature sensors are respectively provided upstream of the fluid pump and at the heating device; the beverage preparation device further includes a control device which is electrically connected to the temperature sensors, the fluid pump, the pulse air valve and the heating device; the control device is configured for obtaining milk froth temperature related parameters and detection results of the temperature sensors, so as to control the fluid pump, the pulse air valve and the heating device based on the milk froth temperature related parameters and the detection results of the temperature sensors.

In one embodiment, the beverage preparation device further includes a control device which is electrically connected to the fluid pump and the pulse air valve; the control device is configured for obtaining beverage milk froth thickness related parameters; and the control device controls the fluid pump and the pulse air valve based on the milk froth thickness related parameters.

In one embodiment, a mounting plate is provided on an outer peripheral side of the pipeline; the mixing device is mounted on the main body via the mounting plate; the outlet end is connected to a three-way valve via a quick connector; and the three-way valve respectively communicates with the beverage outlet and a waste discharge port.

To address the aforementioned technical issues, the present invention provides a beverage preparation device, including:
a mixing device including a pipeline arranged along a vertical direction, the pipeline including an inlet end located at a lower end and an outlet end located at an upper end, a flow channel being formed between the inlet end and the outlet end, fluid flowing from bottom to top in the flow channel against a direction of gravity, the pipeline being provided with a through hole relatively adjacent to the inlet end; and
a delivery conduit arranged transversely relative to a direction of the pipeline; the delivery conduit communicating with the flow channel via the through hole; the delivery conduit and the flow channel forming an included angle;
wherein a transverse cross-sectional dimension of the flow channel in a flow direction of the fluid is in a reducing trend.

In one embodiment, the mixing device includes an opening penetrating downward at the inlet end, a core body removably insertable into the pipeline through the opening, and a sealing component to cover the opening.

In one embodiment, a protruding post protruding downward is provided at a lower end of the core body, the protruding post is located within the flow channel, and a height of the protruding post is greater than an inner diameter of the delivery conduit which is transversely arranged.

In one embodiment, when the fluid flows from the delivery conduit into the flow channel, the fluid first contacts the protruding post transversely, and then bends to flow along the flow channel.

In one embodiment, a highest point of the sealing component when installed within the flow channel does not exceed a highest point of an inner diameter height of the delivery conduit.

In one embodiment, an elastic device is sleeved on an outer periphery of the protruding post, and the elastic device is fixed between the core body and the sealing component.

In one embodiment, the delivery conduit and the pipeline are arranged at a 90-degree included angle.

To address the aforementioned technical issues, the present invention provides a method for preparing a beverage, wherein the beverage is prepared according to parameters preset in a beverage preparation device or manually input parameters obtained by the beverage preparation device, the preparation method including:
obtaining a required milk froth volume V_{S} to be prepared, a rotational speed V₀ of a fluid pump set in the preparation device, and a single-cycle air intake Z₀ of opening and closing of a pulse air valve;
adjusting an operation time S₀ of the fluid pump and a number of opening and closing cycles H₀ of the pulse air valve in real time according to a formula: V_{S} = k (V₀×S₀ + H₀×Z₀), where a value of k is greater than or equal to 1.2 and less than or equal to 2.0;
discharging the milk froth volume V_{S} outward through a pipeline of the beverage preparation device, wherein the pipeline is at least partially in a reducing trend along a milk froth flow direction.

In one embodiment, the beverage preparation device includes a liquid inlet temperature sensor disposed upstream of the fluid pump and a heating device using steam, the preparation method further includes:
obtaining a required milk froth temperature T₂ to be prepared, and a liquid inlet temperature T₁ measured by the liquid inlet temperature sensor;
wherein a steam amount released per unit time from a steam boiler to a mixing chamber is X₁, and a time S₂ for switching on the steam boiler is controlled according to a following formula: ${S}_{2} = k \times C \left({V}_{0}\times {S}_{0}+{H}_{0}\times {Z}_{0}\right) \times \left({T}_{2}-{T}_{1}\right) / X ,$ where C is an energy density of water vapor.

The technical solutions provided by the present invention offer the following advantages:
the present invention provides the mixing device and the beverage preparation device. The mixing device includes the pipeline extending from the inlet end to the outlet end, forming the flow channel in the pipeline to guide a gas-liquid mixed fluid from the inlet end to the outlet end, thereby producing a beverage with foam. The cross-sectional dimension of the flow channel in the direction of fluid flow is at least partially reduced along the flow direction, and the flow velocity slows down when the fluid passes through the section of the flow channel with the reduced trend. This allows the gas and liquid in the fluid to gradually mix, forming a stable-quality foamy beverage. In the present invention, while achieving excellent foaming effects, the mixing device features the pipeline with a larger inner diameter, which is less prone to clogging and easier to clean. This makes the beverage preparation device easier to clean and maintain while also improving the quality of the beverage.

### BRIEF DESCRIPTION OF DRAWINGS

To provide a clearer explanation of the technical solutions in the embodiments of the present invention or in the prior art, the following will briefly introduce the drawings required for describing the embodiments. Obviously, the drawings in the following description are merely some embodiments of the present invention. It is understandable to those of ordinary skill in the art that other drawings can be obtained based on the structures shown in these drawings without creative effort.
FIG. 1 is a partial perspective structural view of a beverage preparation device in accordance with an embodiment of the present invention;
FIG. 2 is a partial front view of the beverage preparation device in FIG. 1;
FIG. 3 is a cross-sectional view of the beverage preparation device in FIG. 2;
FIG. 4 is an enlarged schematic view of area A in FIG. 3;
FIG. 5 is a schematic view showing connection between a delivery conduit and a pipeline in FIG. 4;
FIG. 6 is a perspective structural view of a mixing device in FIG. 1;
FIG. 7 is an exploded perspective structural view of the mixing device in FIG. 6;
FIG. 8 is a perspective structural view of a core body in FIG. 7;
FIG. 9 is a perspective structural view of one flow guide segment in FIG. 8; and
FIG. 10 is a perspective structural view of the core body from another viewing angle in FIG. 9.

### Reference numerals:

1000-beverage preparation device; 100-mixing device; 10-pipeline; 11-inlet end; 12-outlet end; 20-flow channel; 21-flow channel segment; 211-flow channel space; 30-core body; 31-flow guide plate; 311-front end edge; 312-rear end edge; 32-protruding post; 40-sealing component; 50-mounting plate; 60-channel; 61-mixing chamber; 62-liquid outlet temperature sensor; 200-delivery conduit; 201-through hole; 300-pulse air valve; 400-fluid pump; 500-three-way valve; L-outer contour connecting line; R-rotation axis; S-plane normal to the rotation axis.

### DETAILED DESCRIPTION

The technical solutions of the present invention will be clearly and completely described below in conjunction with the accompanying drawings. It is evident that the described embodiments are only a part of the embodiments of the present invention, rather than all of them. The present invention will be explained in detail below with reference to the accompanying drawings and in combination with the embodiments. It should be noted that, in the absence of conflict, the embodiments in the present invention and the features in the embodiments may be combined with each other.

It should be noted that the terms "first", "second" and the like in the description and claims of the present invention, as well as in the above drawings, are used to distinguish similar objects and are not necessarily intended to describe a specific order or sequence.

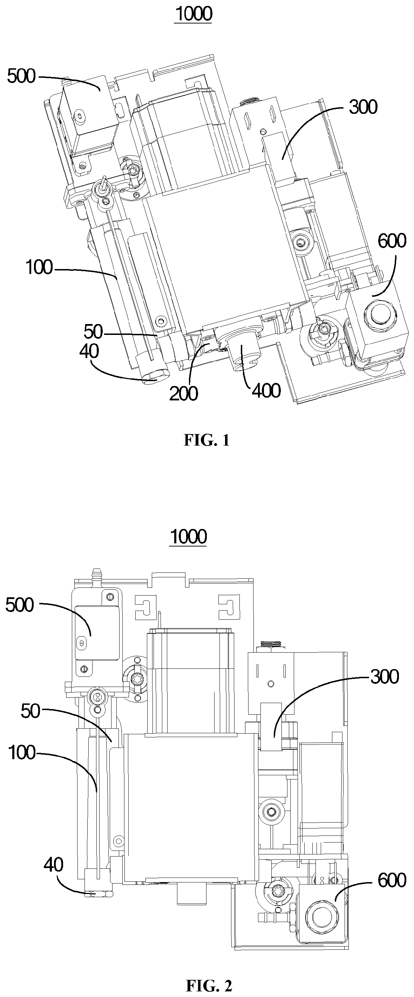

Referring to FIG. 1 to FIG. 4, the present invention provides a mixing device 100 and a beverage preparation device 1000 having the mixing device 100. The mixing device 100 is used to mix liquid beverage ingredients with air during a beverage preparation process to obtain a dense, foamy beverage. The beverage preparation device 1000 may be a foaming machine specifically designed for beverage foaming, or any product that extracts and brews food ingredients while having a foaming function, ultimately producing a beverage. Specifically, the beverage preparation device 1000 may include, but is not limited to, coffee machines, soy milk makers, milk frothers, and the like. For ease of understanding, the following embodiments will use a coffee machine as an example to illustrate the beverage preparation device 1000. It can be understood that in other embodiments, depending on the type of beverage preparation device 1000 and the requirements of beverage preparation, the specific components of the gas and liquid mixed by the beverage preparation device 1000 can be selected as needed.

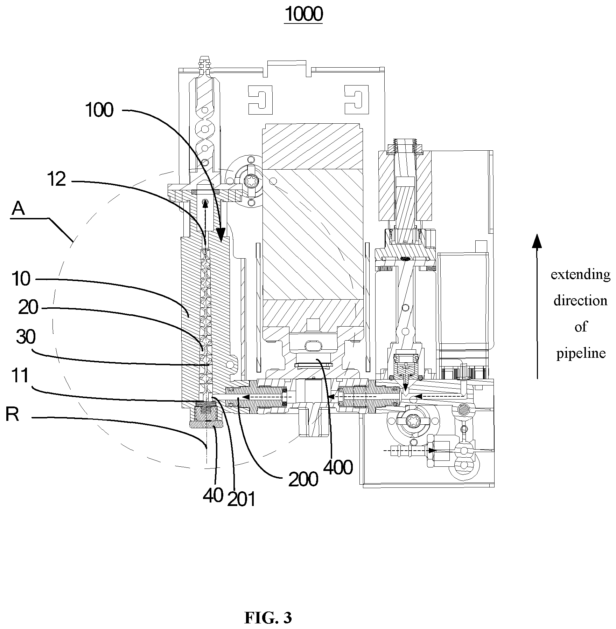

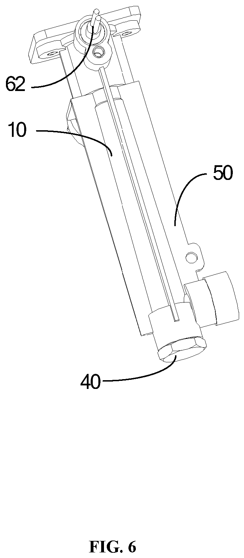

Specifically, referring to FIG. 3 to FIG. 10, in one embodiment, the beverage preparation device 1000 may include a body, the mixing device 100, and a fluid delivery device arranged on the main body. Here, the main body serves as a shell structure that carries various components of the beverage preparation device 1000. The main body includes a beverage outlet. The fluid delivery device is used to deliver milk and air into the mixing device 100, allowing them to fully blend within the mixing device 100 to produce milk froth. Specifically, the mixing device 100 has an inlet end 11 and an outlet end 12. It should be noted that in this embodiment, the inlet end 11 and the outlet end 12 are directional descriptions. The inlet end 11 refers to an area within the mixing device 100 that is relatively upstream in a fluid flow direction. The outlet end 12 refers to an area within the mixing device that is relatively downstream in the fluid flow direction. The fluid delivery device can preliminarily mix milk and air and then use a delivery conduit 200 to transport this mixture into the inlet end 11 of the mixing device 100. Alternatively, the fluid delivery device can controllably deliver milk and air into the mixing device 100 using the same delivery conduit 200. The fluid delivery device can also use different delivery conduits to separately input milk and air into the mixing device 100. The milk froth formed after mixing in the mixing device 100 then flows from the outlet end 12 to the beverage outlet.

In the present embodiment, the delivery device includes a delivery conduit 200, a fluid pump 400 connected to the delivery conduit 200, and a pulse air valve 300. The fluid pump 400 is connected to a milk inlet to pump milk into the delivery conduit 200. The pulse air valve 300 intermittently opens to draw in external air and introduce the air into the delivery conduit 200 while the fluid pump 400 extracts milk, and then the delivery conduit 200 delivers the preliminarily mixed milk and air to the mixing device 100. Optionally, in other embodiments, the delivery device may also include an air pump capable of automatically drawing in air to supply air to the delivery conduit 200.

Furthermore, the beverage preparation device may also include a heating device. The heating device is located downstream of the mixing device 100, specifically between the outlet end 12 and the beverage outlet. Preferably, the heating device is positioned adjacent to the vicinity of the outlet end 12. The heating device can take various forms such as a container with built-in heating wires, a film heater, a thick film heater, or other fluid heating pipelines. In the present invention, the heating device is implemented as a mixing chamber connected to a steam boiler within the beverage preparation device. During operation, the steam boiler is preheated and pressurized, allowing steam to be conveyed through pipelines into the mixing chamber to mix and heat the flowing beverage. The heating temperature can be controlled by adjusting the flow rate of the milk froth and/or the amount of steam introduced to meet the required temperature standards for the beverage. Additionally, a temperature sensor can be installed in the mixing chamber to monitor the temperature after the steam and beverage are mixed.

Preferably, as shown in FIG. 1 and FIG. 2, the beverage preparation device further includes a three-way valve 500. The three-way valve 500 is connected to the outlet end of the mixing device 100, while also connecting to the beverage outlet and a waste discharge port, respectively. The heating device is positioned between the three-way valve 500 and the mixing device 100. During beverage preparation, the fluid pump 400 operates, drawing milk from the milk inlet into the delivery conduit 200. The pulse air valve 300 intermittently opens as needed, introducing air into the delivery conduit 200 under the suction of the fluid pump 400. The mixture of air and milk passes through the delivery conduit 200 and the mixing device 100, where it is thoroughly mixed to produce milk froth. The milk froth exits from the outlet end of the mixing device 100 and is directed through the three-way valve 500 to the beverage outlet. The heating device heats the milk froth as it flows through, ensuring that the temperature of the milk froth exiting the beverage outlet meets the required standards. Preferably, temperature sensors are installed upstream of the fluid pump and downstream of the heating device to monitor the real-time temperature of the flowing fluid. This allows the heating device to precisely adjust its steam temperature and volume, achieving accurate control over the beverage temperature.

Understandably, in a preferred embodiment, the beverage delivery conduit 200 may also be connected to a cleaning solenoid valve. The cleaning solenoid valve can selectively connect to clean water or cleaning solution. Upon device startup or after each beverage preparation, the cleaning solenoid valve opens, connecting to clean water or cleaning solution, and introduces it into the delivery conduit 200 to flush the fluid pump 400, the delivery conduit 200, the mixing device 100, and other pipeline systems. The flushed wastewater can then be selectively discharged through a waste outlet and/or the beverage outlet. Here, the waste outlet may be connected to a wastewater container and/or a waste residue container, or directly to an external drainage pipeline of the device.

Preferably, the beverage preparation device 1000 further includes a control device. The control device acquires parameters related to milk froth production in the beverage preparation device 1000 and is electrically connected to various functional components within the device, such as the fluid pump 400, the pulse air valve, the heating device, etc., to receive and regulate the operational states of these components. These parameters related to milk froth production may be pre-set in the control system or indirectly generated by the control system based on relevant commands or detection results.

According to the preset program of the control system, the beverage preparation device of the present invention can produce at least the following four types of beverages based on different needs: (a). extracting room-temperature milk beverage from the milk tank; (b). extracting milk beverage from the milk tank and activating steam heating to obtain a heated milk beverage; (c). extracting milk beverage from the milk tank and mixing it with air to obtain room-temperature milk froth beverages of varying thickness; and (d). extracting milk beverage from the milk tank, mixing it with air, and then heating it with steam to obtain a heated milk froth beverage.

In one embodiment, the parameters related to milk froth production may include temperature-related parameters, such as the beverage temperature set by the user, the beverage temperature automatically set based on the beverage category identified by the control system, and so on. The control device is configured to acquire the milk froth temperature-related parameters and the detection results from the temperature sensor, and based on these, control the operation of the fluid pump, the pulse air valve, and the heating device. This includes, for example, adjusting the speed of the fluid pump, the steam injection volume and temperature of the heating device, and the opening and closing logic of the pulse air valve, to ensure that the temperature of the milk froth flowing out of the beverage outlet meets the user's requirements.

Optionally, the parameters related to foam production may include foam thickness-related parameters, such as user-set foam thickness or beverage categories automatically recognized by the control system. The control device is used to acquire these foam thickness-related parameters to regulate the fluid pump and the pulse air valve accordingly. For example, it adjusts the rotational speed of the fluid pump, the on-off logic of the pulse air valve, and the opening ratio of the pulse air valve, among other factors, ensuring that the density of the foam flowing out from the beverage outlet meets the user's requirements.

It should be noted that in the above embodiments, the beverage categories can include milk (whole, low-fat, or skim), coconut milk, oat milk, soy milk, almond milk, etc. Each type of beverage category affects the thickness and temperature of the milk froth. By automatically identifying the beverage category through the control device and adjusting components such as the fluid pump, the pulse air valve, or the heating device, precise control over the beverage's taste can be achieved. This enhances the intelligence level of the device, improves the efficiency of beverage preparation, and ensures the stability of the finished product quality.

In one embodiment, referring to FIG. 3 to FIG. 7, the mixing device 100 provided by the present invention includes a pipeline 10. The pipeline 10 has an inlet end 11 and an outlet end 12. The pipeline 10 extends from the inlet end 11 to the outlet end 12. Specifically, the pipeline 10 may extend in a straight line between the inlet end 11 and the outlet end 12, or it may extend in a curved or zigzag shape. Preferably, the pipeline 10 extends approximately along an axis between the inlet end 11 and the outlet end 12 to facilitate the forming and internal cleaning of the pipeline 10. A flow channel 20 is formed inside the pipeline 10, communicating the inlet end 11 with the outlet end 12. The flow channel 20 is used for allowing gas-liquid mixed fluid to flow from the inlet end 11 to the outlet end 12.

Furthermore, a cross-sectional dimension of the flow channel 20 in the flow direction exhibits at least a partial reduction trend along the direction of fluid flow, and the flow velocity of the fluid slows down as it passes through the section of the flow channel where the reduction trend occurs. Specifically, the reduction trend refers to an overall decreasing change in the cross-section of the flow channel along the direction of fluid flow. It should be noted that this change trend may involve the cross-sectional dimension consistently decreasing at the same rate, decreasing at varying rates, or decreasing in segments. That is, within each segment, the cross-sectional dimension may remain unchanged or locally increase before decreasing, but the cross-sectional dimension of a later segment along the flow direction is still smaller than that of the preceding segment. In this way, the fluid is compressed as it flows through the flow channel 20, allowing the air and milk within to fully mix. It should be noted that the cross-sectional dimension of the flow channel 20 may reduce in a stepwise manner or gradually diminish; it may reduce overall from the inlet end 11 to the outlet end 12, or locally reduce between the inlet end 11 and the outlet end 12; the cross-sectional dimension of the flow channel 20 may exhibit a reduction change entirely from the inlet end 11 to the outlet end 12, or may locally increase before reducing, while still maintaining an overall reduction trend. Ideally, the cross-sectional dimension of the flow channel 20 gradually decreases from the inlet end 11 toward the outlet end 12, allowing the pressure of the gas-liquid mixture to change gradually and merge progressively. This achieves excellent mixing effects while avoiding drastic pressure fluctuations, reducing turbulence generation, and enhancing the stability of milk froth quality.

Preferably, the flow channel 20 has a tortuous extension direction within the pipeline 10 to alter the flow direction of the fluid therein, thereby slowing down the gas-liquid mixture and extending its residence time in the mixing device 100. Specifically, the output end of the delivery conduit 200 is connected to the inlet end 11 of the flow channel 20. The gas and/or liquid delivered by the delivery conduit 200 enters at the inlet end 11 of the flow channel 20. After thorough mixing through the flow channel 20, a foamed beverage is formed and exits from the outlet end 12.

Optionally, referring to FIG. 1 and FIG. 2, a mounting plate 50 may be provided on an outer peripheral side of the pipeline 10. The mixing device 100 is mounted to the main body via the mounting plate 50, for example, it can be directly connected to the main body or the flow channel 20, or indirectly mounted to the main body by connecting to other components such as a motor of the fluid pump 400. The connection method can be any convenient installation method such as screwing or snap-fitting, to facilitate installation, disassembly, and maintenance. The inlet end 11 is connected to the delivery conduit 200 via a quick-connect coupling. The outlet end 12 is connected to the three-way valve 500 via a quick-connect coupling. As a result, the mixing device 100 is installed as a separate module in the main body, allowing for easy individual installation and removal of the mixing device 100 in the main body. When the mixing device 100 encounters abnormal situations such as clogging that require inspection, maintenance, or replacement, operations can be carried out conveniently.

Optionally, when the pipeline 10 is installed inside the main body, it is positioned in a manner that extends substantially along a vertical direction. The vertical direction can be roughly parallel to a direction of gravity or form an angle of less than 80 degrees with the direction of gravity. Moreover, the inlet end 11 is located at a lower end of the pipeline 10, and the outlet end 12 is positioned above the inlet end 11. Fluid flows in the flow channel 20 from bottom to top against the direction of gravity. As a result, the fluid must overcome its own gravitational force to flow upward, preventing it from flowing too quickly through the pipeline 10 due to the influence of gravity. Thus, by adjusting the orientation of the pipeline 10, the flow rate of the gas-liquid mixture in the mixing device 100 is slowed down by utilizing counter-gravity, thereby enhancing the mixing effect.

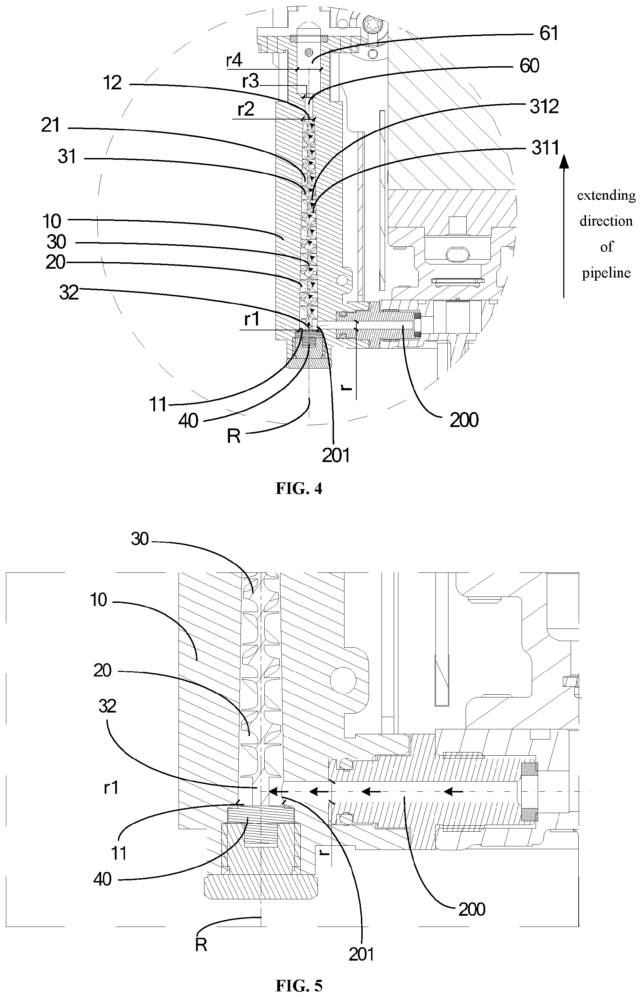

It should be noted that in the present embodiment, an extending direction of the pipeline 10 refers to a direction in which an axis of the pipeline 10 extends from the inlet end 11 to the outlet end 13, while the flow direction of the fluid in the flow channel 20 refers to an extension direction of the internal fluid flow path. As shown in FIG. 4, in one embodiment, the pipeline 10 extends linearly (as indicated by the solid arrow in the figure), while the flow direction extends spirally along the extending direction of the pipeline 10 (as indicated by the dashed arrow in the figure). During the process of flowing from the inlet end 11 to the outlet end 12 along the flow channel 20, the gas-liquid mixed fluid further integrates to form milk froth.

In an alternative embodiment, the fluid flow rate at the output end is V, and the fluid flow rate at the outlet end 12 is V2, with V2 being less than or equal to 0.5×V (half of V). That is to say, through the shape design of the flow channel 20, the flow velocity of the gas-liquid mixture passing through it is reduced by at least half. This, on one hand, prolongs the time the gas-liquid mixture flows through the flow channel 20, enhancing its mixing effect; on the other hand, it slows down the fluid flow rate, increases pressure, and improves the foaming effect. It should be noted that in the present embodiment, the deceleration effect of the mixing device 100 on the fluid is lower than that of typical flow restrictors, with the fluid flow rate being greater than that in restrictors, making it less likely for milk to deposit and clog, thus facilitating maintenance.

In one embodiment, an inner diameter of the delivery conduit 200 at the output end is less than or equal to a minimum inner diameter of the pipeline 10. As a result, the fluid flowing from the delivery conduit 200 into the inlet end 11 of the flow channel 20 experiences a reduction in velocity and an increase in pressure due to the enlarged cross-sectional area. Additionally, the inner diameter of the pipeline 10 is designed to be larger than that of the delivery conduit 200, facilitating easier cleaning and reducing the likelihood of blockages within the pipeline 10.

Optionally, the inner diameter of the delivery conduit 200 at the output end is r, and the inner diameter of the inlet end 11 is r1, where r1 is greater than 2×r (twice r). In this way, the cross-sectional change from the output end of the delivery conduit 200 to the inlet end 11 of the flow channel 20 is utilized to adjust the fluid velocity entering the flow channel 20, thereby slowing down the fluid velocity and increasing the pressure. The inner diameter of the pipeline 10 is large, making it less prone to clogging and easier to clean and maintain. It should be noted that in the present embodiment, the inner diameter of the pipeline 10 is significantly larger than that of typical flow-restricting devices, reducing the likelihood of clogging.

Moreover, referring to FIG. 3, the flow channel 20 includes a plurality of flow channel segments 21 that are sequentially adjacent and interconnected along the extending direction of the pipeline 10. Among these, the flow directions of every two adjacent flow channel segments 21 along the extending direction of the pipeline 10 are different. Consequently, by altering the flow direction of the fluid, the fluid's speed is reduced, extending its passage time through the flow channel 20, thereby achieving a more thorough mixing.

In one embodiment, referring to FIG. 4, along the extending direction of the pipeline 10, the maximum cross-sectional dimensions of at least some of the flow channel segments 21 among the plurality of flow channel segments 21 sequentially decrease. This arrangement ensures that as the gas-liquid mixture flows through each flow channel segment 21, it changes direction while entering progressively smaller spaces. The flow velocity slows down, pressure increases, and compression occurs within the smaller spaces, leading to a gradual change in pressure. The milk and air gradually mix, achieving an excellent fusion effect and producing stable-quality milk froth. Further, preferably, in each of the flow channel segments 21, an upstream cross-sectional dimension of the flow channel segment in the flow direction is larger than a downstream cross-sectional dimension thereof. In this way, the pressure of the gas-liquid mixture also changes gradually in each flow channel segment 21, thereby reducing the generation of turbulence.

In another embodiment, within each of the flow channel segments 21, the cross-sectional dimensions of the flow channel segment 21 vary segmentally along the flow direction, with the cross-sectional dimension at a front end of the flow channel segment in the flow direction being larger than that at its rear end. This may involve an initial increase followed by a decrease, or an initial decrease followed by an increase and then another decrease. Alternatively, preferably, the cross-sectional dimensions of the plurality of flow channel segments 21 gradually decrease in a stepwise manner. Thus, by altering the cross-sectional dimensions, the fluid velocity changes segmentally, further dissipating the kinetic energy of the fluid within each flow channel segment 21, prolonging the time the gas-liquid mixture flows through the mixing device 100, and achieving a better gas-liquid mixing effect.

Based on the aforementioned embodiment, optionally, referring to FIG. 4, the inner diameter of the inlet end 11 is r1, and the inner diameter of the outlet end 12 is r2, where a ratio of r1 to twice r2 is greater than 1 and less than or equal to 3. This configuration achieves compression of the gas-liquid mixture and ensures good mixing effect, while avoiding drastic changes in the cross-sectional dimensions of the pipeline 10 and excessively small pipeline 10 dimensions. Consequently, the pipeline 10 is less prone to clogging and is easier to clean.

Optionally, a fluid pressure at the inlet end 11 is P1, and a fluid pressure at the outlet end 12 is P2, with the ratio of P2 to P1 being greater than or equal to 1.5 and less than or equal to 4. In the present embodiment, the fluid pressure at the outlet end 12 is relatively increased compared to that at the inlet end 11, while the fluid pressure does not undergo drastic changes, reducing the generation of turbulence. This results in a better finished milk froth effect and ensures stable milk froth performance.

Optionally, a fluid velocity at the inlet end 11 is V1, a flow velocity at the outlet end 12 is V2, and a ratio of V1 to V2 is greater than or equal to 2. In the present embodiment, the kinetic energy of the fluid is absorbed by the segmented changes in the flow direction along the flow channel 20, causing the fluid to slow down and increase in pressure as it passes through the flow channel 20. This not only extends the time the gas-liquid mixture flows through the mixing device 100 but also enhances the fluid pressure, resulting in better gas-liquid mixing.

The flow channel segment 21 can change the flow direction in various ways, such as extending radially along the pipeline 10 and flowing back and forth in a zigzag pattern. In a preferred embodiment, as shown in FIG. 4, each flow channel segment 21 is arranged in a spiral shape rotating around a rotation axis R. An extension direction of the rotation axis R is the same as that of the pipeline 10. In the present embodiment, the flow channel segment 21 is configured in a spiral shape rotating around the rotation axis R, causing its flow direction to gradually change along the extension of the pipeline 10. While altering the flow direction, the overall shape of the flow channel 20 becomes smoother, reducing turbulence caused by abrupt changes in flow direction, minimizing sanitary dead corners, making it easier to clean, and ensuring high-quality milk froth with stable foaming effects.

Optionally, among the plurality of flow channel segments 21, the rotation directions of every two adjacent flow channel segments 21 in the extending direction of the pipeline 10 are opposite. For example, a preceding flow channel segment 21 in the extending direction of the pipeline 10 rotates clockwise around the rotation axis R, while an adjacent following flow channel segment 21 rotates counterclockwise around the rotation axis R. As a result, through the shape configuration of multiple flow channel segments 21, repeated redirection of the fluid within is achieved, increasing the loss of fluid kinetic energy, resulting in better deceleration of the fluid. This extends the time the gas-liquid mixture flows through the mixing device 100, enhancing the mixing effect and improving the quality of the finished milk froth.

Based on the above embodiments, the shape configuration of the flow channel 20 can vary. In one embodiment, the inner circumference of the pipeline 10 protrudes with a raised structure, which defines and forms the flow channel 20. In the present embodiment, the mixing device 100 is a monolithic structure, making it easy to assemble.

Furthermore, a channel 60 is connected between the outlet end 12 of the mixing device 100 and the mixing chamber 61 of the heating device. The inner diameter r3 of the channel 60 is smaller than the minimum inner diameter r2 of the mixing device 100, and the inner diameter r4 of the mixing chamber is larger than the maximum inner diameter r1 of the mixing device. This configuration ensures that the mixed beverage is squeezed and injected into the mixing chamber when passing through the channel, allowing steam introduced from the boiler to mix more uniformly with the injected beverage in the mixing chamber.

In another embodiment, referring to FIG. 4 to FIG. 10, the mixing device 100 further includes a core body 30 inserted into the pipeline 10. The flow channel 20 is defined between the core body 30 and the inner circumference of the pipeline 10. The core body 30 can be integrally formed or detachably inserted into the pipeline 10. Thus, by separately arranging the core body 30 and the pipeline 10 to jointly form a spiral flow path, it is easy to mold and reduces production costs.

Preferably, the core body 30 is detachably inserted into the pipeline 10. This allows for the removal and cleaning of the structurally intricate core body 30, enabling more thorough cleaning of the mixing device 100. Even with prolonged use, there will be no accumulation of milk stains or contaminants in the flow channel 20 that could contaminate the entire flow system, thereby enhancing the maintainability of the beverage preparation device 1000 and extending its service life.

Preferably, the pipeline 10 is provided with an opening at the inlet end 11. The core body is detachably inserted into the pipeline 10 from the opening. The opening is located along the extension path of the flow channel 20. The mixing device further includes a sealing component that blocks the opening.

Specifically, the pipeline 20 has an opening downward at the inlet end 11. The core body 30 is removably inserted into the pipeline 10 through the opening. Preferably, the core body 30 is inserted into the pipeline 10 from below upwards. The opening of the pipeline 10 can be sealed with a sealing component, which may be integrated with the core body 30 or separate from the core body 30. When maintenance or cleaning of an interior of the pipeline 10 is required, the sealing component can be removed to clean the interior of the pipeline 10, making the operation simple and convenient. The waste liquid from cleaning flows directly out through the opening without remaining in the pipeline.

Preferably, as shown in FIG. 5, which illustrates the connection view between the pipeline 10 and the delivery conduit 200. The arrow direction in the FIG.5 indicates the flow direction of fluid from the delivery conduit 200 into the flow channel 20. As shown, a through hole 201 is provided on a circumferential side of the pipeline 10. The delivery conduit 200 passes through the through hole 201. The through hole 201 is relatively adjacent to the inlet end 11 and is used to introduce fluid into the flow channel 20. The through hole 201 connects to the flow channel 20, allowing fluid to be injected into the pipeline 10 from the end of the core body 30. Preferably, the delivery conduit 200 is arranged at a 90-degree angle to the pipeline 10, so that the fluid is injected radially into the flow channel 20 and then passes upward through the core body 30. This arrangement of the delivery conduit 200 and the pipeline 10 achieves a redirection of the incoming fluid flow, causing the fluid that has just entered the flow channel 20 to impact the internal structure of the pipeline 10 during the redirection process, rapidly dissipating kinetic energy and quickly reducing flow velocity. Subsequently, the fluid passes upward through the core body 30, achieving thorough mixing of milk and air. Preferably, when the sealing component is installed in the flow channel 20, its highest point should not exceed the highest point of the inner diameter height of the delivery conduit 200, so as to avoid preventing the fluid from flowing smoothly into the flow channel 20.

Preferably, the through hole 201 is formed on the circumferential side of the pipeline 10, while the opening is arranged on the end side of the flow channel 20, with their positions distributed at an angle. The pipeline 10 does not affect the disassembly and assembly of the core body 30, while also making the structure of the mixing device 100 compact and reasonable.

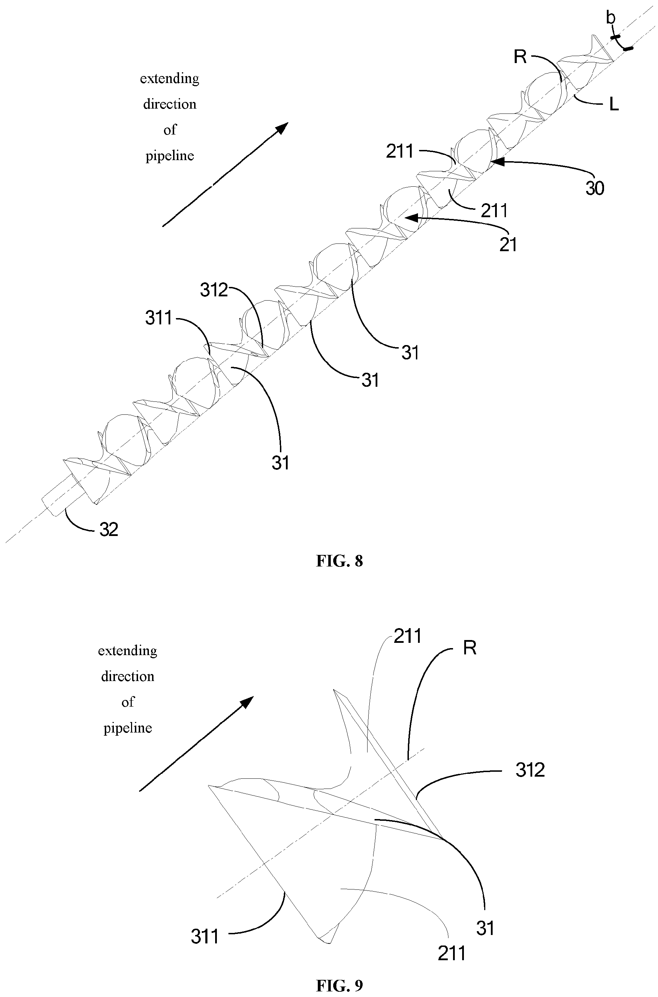

Furthermore, referring to FIG. 4 and FIG. 8, the core body 30 is provided with a protruding post 32 at an end adjacent to the sealing component. The protruding post 32 is positioned in the flow direction of the fluid introduced by the flow channel 201. In this way, when the fluid flows from the delivery conduit 200 into the flow channel 20, it first contacts the protruding post 32 laterally and then bends to flow along the flow channel 20. On one hand, this facilitates gripping the core body 30 for insertion and removal; on the other hand, the protruding post 32 splits and buffers the fluid injected from the delivery conduit 200, further dissipating its kinetic energy and causing the fluid velocity to decrease rapidly. Consequently, after the fluid collides with the protruding post 32 and slows down, it enters the smaller-sized flow channel 20, where it is compressed upward, achieving thorough mixing of gas and liquid. Preferably, the height of the protruding post 32 is greater than the inner diameter r of the laterally arranged delivery conduit 200, to adequately buffer and split the introduced fluid.

Preferably, an elastic device is sleeved around a periphery of the protruding post 32, and the elastic device is fixed between the core body 30 and the sealing component. As a result, the elastic device buffers the impact force of the fluid, on one hand, further accelerating the reduction of the fluid's flow velocity, and on the other hand, preventing wear on the protruding post 32 from prolonged impact.

Furthermore, a flexible sealing strip, such as a dense rubber strip, is arranged between the outer circumference of the core body 30 and the inner circumference of the pipeline 10, to construct a flow channel 20 with better sealing performance. This guides the gas-liquid mixture to flow in the flow channel 20 according to the preset flow direction, preventing flow path short circuits that could affect the milk froth generation effect.

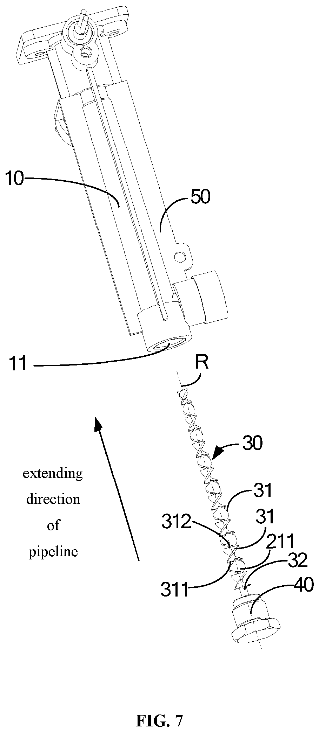

Based on the above embodiments, referring to FIG. 4 and FIG. 7, the pipeline 10 can be designed in a curved shape, while the core body 30 is constructed as a flexible structure to facilitate installation and removal. Preferably, the pipeline 10 is designed in a straight shape, and the core body 30 can also be constructed as a rigid structure, which does not affect its disassembly and assembly, while the flow channel 20 is less prone to deformation and aging.

Furthermore, referring to FIG. 4 and FIG. 7 to FIG. 10, the core body 30 includes a plurality of segments of guide plates 31 arranged sequentially along the extending direction of the pipeline 10. Each segment of the guide plate 31 is configured in a spiral shape rotating around the rotation axis R. In the extending direction of the pipeline 10, the rotation directions of each adjacent two segments of the guide plates 31 are opposite, so that each segment of the guide plate 31 and the inner circumference of the pipeline 10 define a flow channel segment 21. In the present embodiment, the inner circumference of the pipeline 10 is constructed as a smooth structure, while the core body 30 is correspondingly configured in a spiral shape to form a spiral flow channel 20. After the core body 30 is disassembled, it can be rinsed and thoroughly cleaned, and the interior of the pipeline 10 has a smooth shape that is easy to clean.

Furthermore, referring to FIG. 8 to FIG. 10, each of the guide plates 31 extends radially from the rotation axis R toward the inner circumference of the pipeline 10, such that each segment of the guide plate 31 forms two separate flow channel spaces 211 on its radial sides with the inner circumference of the pipeline 10. These two flow channel spaces 211 together constitute one flow channel segment 21. This configuration increases the flow rate of the flow channel 20, while the guide plates 31 and the flow channel 20 exhibit an axisymmetric structure. Within each flow channel segment 21, the pressure distribution is more uniform, and the core body 30 possesses good rigidity, making it less prone to deformation over extended use.

Optionally, the rear end edge 312 of each guide plate 31 in the flow direction rotates around the rotation axis R by a specific angle compared to its front end edge 311. Optionally, the specific angle is greater than 350 degrees and less than 370 degrees. Preferably, the specific angle is 360 degrees. That is to say, the fluid flowing through each flow channel segment 21 makes a full turn. As a result, the flow path of the gas-liquid mixture in the pipeline 10 is extended as much as possible, promoting thorough mixing of milk and air.

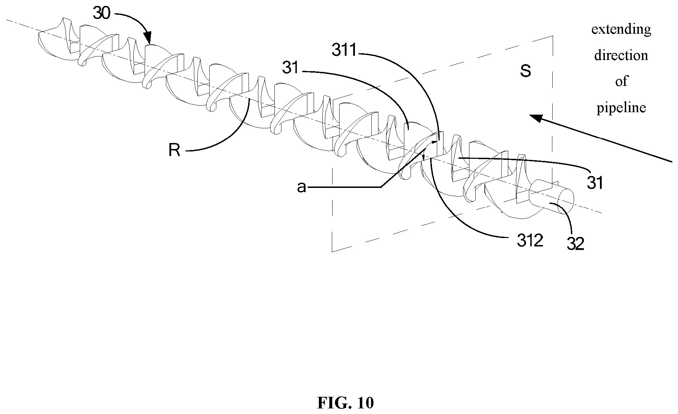

Referring to FIG. 10, optionally, in a normal plane S of the rotation axis R, the front end edge 311 of the guide plate 31 described in the latter section intersects with the rear end edge 312 of the guide plate 31 described in the preceding section at a specific angle a. As shown in the drawings, there are a plurality of normal planes of the rotation axis R. The normal plane is selected at the intersection of the front end edge 311 of the guide plate 31 in the latter section and the rear end edge 312 of the guide plate 31 in the preceding section, and the angle a between the two edges is measured. In the present embodiment, the fluid is split and buffered by the edges of the guide plate 31 between the two flow guide segments, while simultaneously changing the direction of flow rotation. This design not only achieves excellent energy dissipation and deceleration effects but also reduces dead angles in the structure of the core body 30, making it easier to clean and capable of handling larger flow rates. Preferably, the specific angle a is greater than 80 degrees and less than 100 degrees. Preferably, the specific angle a is approximately 90 degrees, meaning the front end edge 311 of the guide plate 31 in the latter section is essentially perpendicular to the rear end edge 312 of the guide plate 31 in the preceding section. This configuration gives the guide plate 31 a shape that is easier to form, has fewer cleaning dead spots, and is more convenient for cleaning and molding.

In an optional embodiment, the inner diameter of the pipeline 10 gradually decreases along its extending direction, and the outer diameter of the core body 30 sequentially decreases along the extending direction of the pipeline 10. This configuration, in conjunction with the pipeline 10 structure where the inner peripheral dimensions sequentially reduce along its extension direction, creates a flow channel structure with gradually decreasing cross-sectional dimensions. This allows the milk and gas in the gas-liquid mixture to fully blend, achieving excellent milk froth formation. Additionally, it makes it easier for the core body 30 to be pulled out from the inlet end 11 for cleaning, enhancing the user's operational experience during maintenance.

In one embodiment, referring to FIG. 8, the core body 30 extends along the rotation axis R, with an angle b between its outer contour connecting line L (i.e., the connecting line at its outermost end in the radial direction) and the rotation axis R greater than 0 degrees and less than or equal to 10 degrees. Within this range, the core body 30 features a gradually varying structure that achieves progressive compression of the fluid, thoroughly blending milk and air to form stable-quality milk froth while reducing the occurrence of residue due to overly slow milk froth flow.

Upstream of the fluid pump 400, an inlet temperature sensor is provided to detect the initial temperature of the extracted beverage, and a liquid outlet temperature sensor 62 is installed in the mixing chamber to measure the temperature of the beverage after heating by the heating device. The liquid outlet temperature sensor 62 in the mixing chamber is positioned adjacent to the outlet of the mixing chamber.

The present invention also provides a beverage preparation method, which prepares beverages based on parameters preset in a beverage preparation device or manually input parameters obtained by the beverage preparation device. These parameters include, but are not limited to: foam volume V_{S}, cup capacity, liquid output temperature T₂, etc. Among them, the cup capacity parameter of the beverage is determined by a rotational speed V₀ and an operation time S₀ of the fluid pump. The thickness of the foam is determined by the number of opening and closing cycles H₀ and an air intake volume Z₀ of the pulse air valve.

Among these, the foam volume V_{S}=k×(V₀×S₀+H₀×Z₀); where k is a foam volume relationship parameter, typically set between 1.2 and 2.0. The larger the coefficient k is set, the more foam is generated, resulting in a fluffier texture. Conversely, a smaller coefficient k produces less foam, leading to a finer texture. During the preparation process, the operation time S₀ of the fluid pump 400 and the number of opening and closing cycles H₀ of the pulse air valve are adjusted in real time based on the above formula and parameter relationships.

Furthermore, with the inlet liquid temperature measured by the inlet temperature sensor as T₁, the preset or actively set outlet liquid temperature as T₂, the steam quantity required for the beverage temperature to rise from T₁ to T₂ as X₀, and the steam quantity released into the mixing chamber per unit time by the steam boiler as X₁, the time the steam boiler is activated is S₂; where ${S}_{2} = {X}_{0} / {X}_{1} .$

Through data derivation, X₀=V_{S}×C(T₂- T₁), where C is an energy density of water vapor, typically 2260 kJ/kg.

Thus, the formula among the various parameters is: S₂= k×C(V₀×S₀+H₀×Z₀) ×(T₂-T₁)/X₁.

Furthermore, the liquid outlet sensor continuously monitors the temperature of the beverage in the mixing chamber. When the temperature reaches the discharge temperature T₂, the steam input is actively shut off to prevent the beverage from overheating.

Obviously, the embodiments described above are only a part of the embodiments of the present invention, not all of them. Based on the embodiments of the present invention, any other forms of variations or modifications made by those of ordinary skill in the art without creative efforts should fall within the scope of protection of the present invention.

## Claims

1. A mixing device, **characterized by** comprising:
a pipeline having an inlet end and an outlet end, the pipeline extending from the inlet end to the outlet end, a flow channel communicating the inlet end with the outlet end being formed within the pipeline, a cross-sectional dimension of the flow channel in a flow direction of a fluid being at least partially in a reducing trend along the flow direction, and a flow velocity of the fluid decreasing when flowing through a section of the flow channel having the reducing trend.

2. The mixing device as claimed in claim 1, wherein the flow channel comprises a plurality of flow channel segments communicating with one another in an extending direction of the pipeline, and flow directions of every two adjacent flow channel segments are different.

3. The mixing device as claimed in claim 2, wherein in the extending direction of the pipeline, maximum cross-sectional dimensions of the plurality of flow channel segments decrease sequentially.

4. The mixing device as claimed in claim 3, wherein in each of the flow channel segments, a cross-sectional dimension of the flow channel segment gradually decreases along the flow direction; or
in each of the flow channel segments, a cross-sectional dimension of the flow channel segment changes in stages along the flow direction, and an upstream cross-sectional dimension of the flow channel segment in the flow direction is larger than a downstream cross-sectional dimension thereof; or
cross-sectional dimensions of the plurality of flow channel segments decrease gradually in a step-like trend.

5. The mixing device as claimed in claim 1, wherein an inner diameter at the inlet end is r1, an inner diameter at the outlet end is r2, and a ratio of r1 to 2×r2 is greater than 1 and less than or equal to 3; and/or
a fluid pressure at the inlet end is P1, a fluid pressure at the outlet end is P2, and a ratio of P2 to P1 is greater than or equal to 1.5 and less than or equal to 4; and/or
a fluid flow velocity at the inlet end is V1, a fluid flow velocity at the outlet end is V2, and a ratio of V1 to V2 is greater than or equal to 2.

6. The mixing device as claimed in any one of claims 2 to 4, wherein each of the flow channel segments is arranged in a spiral shape rotating around a rotation axis, an extension direction of the rotation axis is the same as the extending direction of the pipeline; and/or
among the plurality of flow channel segments, rotation directions of every two adjacent flow channel segments in the extending direction of the pipeline are opposite.

7. The mixing device as claimed in claim 1, further comprising a core body inserted into the pipeline, the flow channel being defined and formed between the core body and an inner wall of the pipeline; wherein the core body is integrally formed or detachably inserted into the pipeline.

8. The mixing device as claimed in claim 7, wherein the core body comprises a plurality of segments of flow guide plates arranged sequentially along the extending direction of the pipeline, each segment of the flow guide plate is arranged in a rotating spiral shape, and rotation directions of every two adjacent flow guide plates in the extending direction of the pipeline are opposite.

9. The mixing device as claimed in claim 8, wherein each of the flow guide plates extends radially toward a wall of the pipeline, such that two flow channel spaces separated from each other are respectively formed between two sides of each segment of the flow guide plate and the wall of the pipeline.

10. The mixing device as claimed in claim 8, wherein the flow channel is provided with a rotation axis, and a rear end edge of each segment of the flow guide plate in the flow direction is rotated by a specific rotation angle around the rotation axis compared to a front end edge thereof.

11. The mixing device as claimed in claim 10, wherein the specific rotation angle is greater than 350 degrees and less than 370 degrees.

12. The mixing device as claimed in claim 10, wherein in a plane normal to the rotation axis, a front end edge of a subsequent segment of flow guide plate intersects a rear end edge of a preceding segment of flow guide plate at a specific included angle.

13. The mixing device as claimed in claim 12, wherein the specific included angle is greater than 80 degrees and less than 100 degrees.

14. The mixing device as claimed in any one of claims 7 to 13, wherein an inner diameter of the pipeline gradually decreases along the extending direction of the pipeline, and an outer diameter of the core body gradually decreases along the extending direction of the pipeline.

15. The mixing device as claimed in claim 10, wherein an included angle b between an outer contour connecting line of the core body along an axial direction and the rotation axis is greater than 0 degrees and less than or equal to 10 degrees.

16. The mixing device as claimed in claim 7, wherein an opening is provided at the inlet end of the pipeline, the core body is detachably inserted into the pipeline through the opening, the opening is located on a path in the extending direction of the flow channel, and the mixing device further comprises a sealing component to seal the opening.

17. The mixing device as claimed in claim 16, wherein the pipeline extends along a vertical direction of gravity, the inlet end is located at a lower end of the pipeline, and the core body is inserted upwardly into the pipeline through the opening.

18. The mixing device as claimed in claim 16, wherein a protruding post extending toward the sealing component is provided on the core body, and the protruding post is disposed on a flow path of the fluid introduced into the flow channel.

19. The mixing device as claimed in claim 1, wherein a through hole is provided on a peripheral side of the pipeline, and the through hole is relatively adjacent to the inlet end and configured for introducing the fluid into the flow channel.

20. The mixing device as claimed in claim 1, wherein a protruding structure is protrudingly provided on an inner circumference of the pipeline, and the protruding structure defines and forms the flow channel.

21. A beverage preparation device, **characterized by** comprising:
a main body having a beverage outlet;
a mixing device provided on the main body, the mixing device comprising a pipeline having an inlet end and an outlet end, the pipeline extending from the inlet end to the outlet end, a flow channel communicating the inlet end with the outlet end being formed within the pipeline, a cross-sectional dimension of the flow channel in a flow direction of a fluid being in a reducing trend, wherein the flow channel comprises a plurality of flow channel segments adjacently connected and communicating with each other in an extending direction of the pipeline, and flow directions of every two adjacent flow channel segments are different; the pipeline is provided with a through hole relatively adjacent to the inlet end; the outlet end communicates with the beverage outlet; and
a delivery conduit, an output end of the delivery conduit communicating with the flow channel via the through hole.

22. The beverage preparation device as claimed in claim 21, wherein a fluid flow velocity at the output end is V, a fluid flow velocity at the outlet end is V2, and V2 is less than or equal to 0.5×V; and/or
an inner diameter of the delivery conduit at the output end is less than or equal to a minimum inner diameter of the pipeline; and/or
an inner diameter of the delivery conduit at the output end is r, an inner diameter at the inlet end is r1, and r1 is greater than 2×r.

23. The beverage preparation device as claimed in claim 22, further comprising a fluid pump, a pulse air valve and a heating device; the fluid pump being configured for pumping the fluid to the delivery conduit; the pulse air valve being configured for intermittent opening and closing; and the heating device being disposed downstream of the outlet end.

24. The beverage preparation device as claimed in claim 23, wherein temperature sensors are respectively provided upstream of the fluid pump and at the heating device; the beverage preparation device further comprises a control device which is electrically connected to the temperature sensors, the fluid pump, the pulse air valve and the heating device; the control device is configured for obtaining milk froth temperature related parameters and detection results of the temperature sensors, so as to control the fluid pump, the pulse air valve and the heating device based on the milk froth temperature related parameters and the detection results of the temperature sensors.

25. The beverage preparation device as claimed in claim 23, further comprising a control device which is electrically connected to the fluid pump and the pulse air valve; the control device being configured for obtaining beverage milk froth thickness related parameters; and the control device controlling the fluid pump and the pulse air valve based on the milk froth thickness related parameters.

26. The beverage preparation device as claimed in claim 21, wherein a mounting plate is provided on an outer peripheral side of the pipeline; the mixing device is mounted on the main body via the mounting plate; the outlet end is connected to a three-way valve via a quick connector; and the three-way valve respectively communicates with the beverage outlet and a waste discharge port.

27. A beverage preparation device, **characterized by** comprising:
a mixing device comprising a pipeline arranged along a vertical direction, the pipeline comprising an inlet end located at a lower end and an outlet end located at an upper end, a flow channel being formed between the inlet end and the outlet end, fluid flowing from bottom to top in the flow channel against a direction of gravity, the pipeline being provided with a through hole relatively adjacent to the inlet end; and
a delivery conduit arranged transversely relative to a direction of the pipeline; the delivery conduit communicating with the flow channel via the through hole; the delivery conduit and the flow channel forming an included angle;
wherein a transverse cross-sectional dimension of the flow channel in a flow direction of the fluid is in a reducing trend.

28. The beverage preparation device as claimed in claim 27, wherein the mixing device comprises an opening penetrating downward at the inlet end, a core body removably insertable into the pipeline through the opening, and a sealing component to cover the opening.

29. The beverage preparation device as claimed in claim 28, wherein a protruding post protruding downward is provided at a lower end of the core body, the protruding post is located within the flow channel, and a height of the protruding post is greater than an inner diameter of the delivery conduit which is transversely arranged.

30. The beverage preparation device as claimed in claim 29, wherein when the fluid flows from the delivery conduit into the flow channel, the fluid first contacts the protruding post transversely, and then bends to flow along the flow channel.

31. The beverage preparation device as claimed in claim 28, wherein a highest point of the sealing component when installed within the flow channel does not exceed a highest point of an inner diameter height of the delivery conduit.

32. The beverage preparation device as claimed in claim 29, wherein an elastic device is sleeved on an outer periphery of the protruding post, and the elastic device is fixed between the core body and the sealing component.

33. The beverage preparation device as claimed in claim 27, wherein the delivery conduit and the pipeline are arranged at a 90-degree included angle.

34. A method for preparing a beverage, **characterized in that** the beverage is prepared according to parameters preset in a beverage preparation device or manually input parameters obtained by the beverage preparation device, the preparation method comprising:
obtaining a required milk froth volume V_{S} to be prepared, a rotational speed V₀ of a fluid pump set in the preparation device, and a single-cycle air intake Z₀ of opening and closing of a pulse air valve;
adjusting an operation time S₀ of the fluid pump and a number of opening and closing cycles H₀ of the pulse air valve in real time according to a formula: V_{S} = k×(V₀×S₀ + H₀×Z₀), where a value of k is greater than or equal to 1.2 and less than or equal to 2.0;
discharging the milk froth volume V_{S} outward through a pipeline of the beverage preparation device, wherein the pipeline is at least partially in a reducing trend along a milk froth flow direction.

35. The method for preparing the beverage as claimed in claim 34, wherein the beverage preparation device comprises a liquid inlet temperature sensor disposed upstream of the fluid pump and a heating device using steam, the preparation method further comprising:
obtaining a required milk froth temperature T₂ to be prepared, and a liquid inlet temperature T₁ measured by the liquid inlet temperature sensor;
wherein a steam amount released per unit time from a steam boiler to a mixing chamber is X₁, and a time S₂ for switching on the steam boiler is controlled according to a following formula: ${S}_{2} = k \times C \left({V}_{0}\times {S}_{0}+{H}_{0}\times {Z}_{0}\right) \times \left({T}_{2}-{T}_{1}\right) / X ,$ where C is an energy density of water vapor.
